# EUROPEAN PATENT SPECIFICATION

(11) **EP 3 965 467 B1**
(45) Date of publication and mention of the grant of the patent: **28.01.2026**
(21) Application number: 19927132.1
(22) Date of filing: 02.05.2019
(51) Int. Cl.: H04W 28/04, H04W 24/04, H04L 1/00, H04W 72/04, H04L 1/1607, H04L 1/1829, H04W 72/20, H04W 72/542

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 09.03.2022
(73) Proprietor: NTT DOCOMO, INC., Chiyoda-Ku Tokyo 100-6150 (JP)
(72) Inventor: HARADA, Hiroki, Tokyo 100-6150 (JP); YOSHIOKA, Shohei, Tokyo 100-6150 (JP); MATSUMURA, Yuki, Tokyo 100-6150 (JP); MURAYAMA, Daisuke, Tokyo 100-6150 (JP); KURITA, Daisuke, Tokyo 100-6150 (JP)
(74) Representative: Hoffmann Eitle
(86) International application number: PCT/JP2019/018187
(87) International publication number: WO 2020/222276

(56) References cited:
- WO-A1-2019/031850
- PANASONIC: "HARQ enhancement for NR-U", vol. RAN WG1, no. Xi'an, China; 20190408 - 20190412, 29 March 2019 (2019-03-29), XP051691628, Retrieved from the Internet <URL:http://www.3gpp.org/ftp/tsg%5Fran/WG1%5FRL1/TSGR1%5F96b/Docs/R1%2D1904599%2Ezip> [retrieved on 20190329]
- FUJITSU: "Scheduling/HARQ enhancements for NR-U", vol. RAN WG1, no. Reno, USA; 20190513 - 20190517, 30 April 2019 (2019-04-30), XP051708469, Retrieved from the Internet <URL:http://www.3gpp.org/ftp/tsg%5Fran/WG1%5FRL1/TSGR1%5F97/Docs/R1%2D1906434%2Ezip> [retrieved on 20190430]
- PANASONIC: "HARQ enhancement for NR-U", 3GPP TSG RAN WG1 #96B R1-1904599, 29 March 2019 (2019-03-29), XP051691628
- "HARQ enhancement for NR-U", 3GPP TSG RAN WG1 #96B R1-1904951, 30 March 2019 (2019-03-30), XP051691886
- HUAWEI: "Feature lead summary of HARQ enhancements for NR-U", 3GPP TSG RAN WG1 #96B R1-1905649, 10 April 2019 (2019-04-10), XP009108222
- FUJITSU: "Scheduling/HARQ enhancements for NR-U", 3GPP TSG RAN WG1 #97 R1-1906434, 30 April 2019 (2019-04-30), XP051708469
- VIVO: "Discussion on HARQ operation for NR-U", 3 GPP TSG RAN WG1 #97 R1-1906132, 1 May 2019 (2019-05-01), XP051708173
- "HARQ enhancement for NR-U", 3GPP TSG RAN WG1 #97 R1-1906199, 3 May 2019 (2019-05-03), XP051708238

## Description

### Technical Field

The present invention relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"

WO 2019/031850 A1 relates to a method for receiving a PDCCH by a terminal in a mobile communication system comprising the steps of: receiving a first PDCCH including first DCI from a base station through a first PDCCH search space; and receiving a second PDCCH including second DCI from the base station through a second PDCCH search space, wherein the first DCI and second DCI are for scheduling the same PDSCH for the same TB or TBs associated with the same HARQ process, are for scheduling different PDSCHs for the same TB or TBs associated with the same HARQ process, or are for scheduling different PDSCHs for different TBs or TBs associated with different HARQ processes.

PANASONIC, "HARQ enhancement for NR-U", 3GPP DRAFT, R1 -1904599 PANASONIC NR-U HARQ, 3RD GENERATION PARTNERSHIP PROJECT (3GPP), MOBILE COMPETENCE CENTRE, 650, ROUTE DES LUCIOLES, F-06921 SOPHIA-ANTIPOLIS CEDEX, FRANCE, vol. RAN WG1, no. Xi'an, China, 29 March 2019 relates to HARQ enhancement for NR-U. The following is proposed: dynamic HARQ codebook size determination only should be supported. To avoid ambiguity on understanding of the number of triggered HARQ-ACK between gNB and UE, an indication of the number of HARQ-ACK like total DAI should be sent as a DCI to trigger additional HARQ-ACK in the later COT(s).

FUJITSU: "Scheduling/HARQ enhancements for NR-U",3GPP DRAFT; R1-1906434 SCHEDULINGHARQ ENHANCEMENTS FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. Reno, USA; 20190513 - 20190517 30 April 2019 (2019-04-30)discloses PDSCH grouping by explicitly signalling a group index in DCI scheduling the PDSCH.

### Summary of Invention

### Technical Problem

For future radio communication systems (also simply denoted hereinafter as NR), a user terminal (UE) that feeds back (transmits) downlink shared channel (e.g., Physical Downlink Shared Channel (PDSCH)) transmission confirmation information (which may be referred to as, for example, Hybrid Automatic Repeat reQuest ACKnowledgement (HARQ-ACK), ACK/NACK, A/N, and so on) by using a certain codebook (e.g., a dynamic HARQ-ACK codebook (mentioned later)) is under study.

For example, HARQ-ACK feedback using the certain codebook is controlled based on a certain field (e.g., a DL assignment index (Downlink assignment index (DAI)) field) in downlink control information (DCI) used for PDSCH scheduling.

However, when the UE fails to detect the DCI, understanding of the number of bits of HARQ-ACK that is fed back by using the certain codebook may be inconsistent between the UE and a base station. The inconsistency in understanding of the number of feedback bits of the HARQ-ACK may cause an error and retransmission in a higher layer, and may cause reduction in at least one of frequency use efficiency and throughput.

The present invention has been made in view of the above-described respects, and an object of the present invention is to provide a user terminal and a radio communication method that can prevent inconsistency in understanding of the number of feedback bits of transmission confirmation information (e.g., HARQ-ACK) between the user terminal and a base station.

### Solution to Problem

The object of the invention is achieved by the subject-matter of the independent claims. Advantageous embodiments are defined in the dependent claims. Further examples are provided for facilitating the understanding of the invention. A user terminal according to an aspect includes: a receiving section that receives downlink control information to request feedback of transmission confirmation information for one or more downlink shared channels; and a control section that determines the number of feedback bits of the transmission confirmation information based on at least one of information related to the number of feedback bits in the downlink control information and information related to transmission timing of last downlink control information to schedule the downlink shared channel.

### Advantageous Effects of Invention

According to the present invention, it is possible to prevent inconsistency in understanding of the number of feedback bits of transmission confirmation information (e.g., HARQ-ACK) between a base station and a UE.

### Brief Description of Drawings

FIGS. 1A and 1B are diagrams to show examples of HARQ-ACK feedback in NR-U;
FIGS. 2A to 2C are diagrams to show examples of HARQ-ACK feedback using a dynamic HARQ-ACK codebook;
FIG. 3 is a diagram to show an example of HARQ-ACK feedback according to a first aspect;
FIG. 4 is a diagram to show an example of HARQ-ACK feedback for each PDSCH group according to a second aspect;
FIG. 5 is a diagram to show another example of HARQ-ACK feedback common to PDSCH groups according to the second aspect;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the radio base station and the user terminal according to one embodiment.

### Description of Embodiments

### (NR-U)

For future radio communication systems (e.g., NR), utilizing not only a frequency band (licensed band) licensed to a communication carrier (operator) but also a frequency band (unlicensed band) (e.g., a 2.4 GHz band or a 5 GHz band) different from the licensed band is under study.

An NR system that utilizes the unlicensed band may be referred to as NR-Unlicensed (U), NR License-Assisted Access (LAA), an NR-U system, and so on.

In the unlicensed band, it is assumed that a plurality of systems including not only the NR-U system but also an LAA system, a Wi-Fi (registered trademark) system, and the like that are other than the NR-U system coexists, and thus at least one of interference control and collision control is performed between the plurality of the systems.

A transmission node in the NR-U systems performs listening to check the presence or absence of transmission by another node (e.g., a base station, a user terminal, a Wi-Fi apparatus, or the like) before transmission of a signal (e.g., a data signal) in the unlicensed band. Note that the listening may be referred to as Listen Before Talk (LBT), Clear Channel Assessment (CCA), a carrier sense, a channel access procedure, or the like.

The transmission node may be, for example, a base station (e.g., gNodeB, (gNB), a transmission/reception point (TRP), or a network (NW)) for downlink (DL), and may be, for example, a user terminal (e.g., a User Equipment (UE)) for uplink (UL). A reception node to receive a signal from the transmission node may be, for example, a UE in a DL, and may be, for example, a base station in a UL.

The transmission node starts transmission after a certain period (e.g., immediately after or a backoff period) from detection of the absence (idle) of transmission by another apparatus in listening, and does not perform signal transmission when the presence (busy or LBT-busy) of transmission by another apparatus is detected in listening.

On the other hand, when the absence (idle or LBT-idle) of transmission by another apparatus is detected in listening, the transmission node obtains a transmission opportunity (TxOP or channel occupancy), and starts signal transmission. The time of the transmission opportunity is referred to as Channel Occupancy Time (COT). Note that the COT and TxOP may be used interchangeably.

The COT is a total length of time for all transmissions in a transmission opportunity and a gap within a certain time, and may be equal to or less than a maximum COT (MCOT). The MCOT may be determined based on channel access priority class. The channel access priority class may be associated with a contention window size.

For NR, sharing (COT sharing) a TxOP (COT) obtained by a certain node with one or more nodes is also under study. In COT sharing, the DL and UL may be in a one-to-one relationship, or may be in a one-to-multiple relationship or multiple-to-one relationship.

LBT to obtain a TxOP is referred to as Initial-LBT (I-LBT). When the TxOP (COT) obtained by the certain node is shared with another node, LBT (short LBT) may be performed before transmission from another node, or may not be performed. Whether the short LBT is performed may be determined based on a length of a gap period from the end of transmission of a previous node in the TxOP.

Note that the node may perform, as I-LBT, LBT in LTE LAA or receiver assisted LBT. LBT in LTE LAA in this case may be Category 4.

The NR-U system as described above may be operated by carrier aggregation (CA) or dual connectivity (DC) of a component carrier (CC) in an unlicensed band (unlicensed CC) and a CC in a licensed band (licensed CC), or may be operated by a stand-alone (SA) on the unlicensed CC.

Note that the unlicensed CC may be interchangeably interpreted as an unlicensed band, an unlicensed spectrum, a secondary cell (SCell), a licensed assisted access (LAA) SCell, an LAA cell, a primary cell (referred to as a PCell, a Primary Secondary Cell (PSCell), a Special Cell (SpCell), and so on), a frequency to which channel sensing is applied, an NR-U target frequency, and the like.

The licensed CC may be interchangeably interpreted as a licensed band, a licensed spectrum, a PCell, a PSCell, an SpCell, an SCell, a non-NR-U-target frequency, Rel. 15, NR, a frequency to which channel sensing is not applied, an NR target frequency, and the like.

### (HARQ-ACK Feedback)

For NR-U, feeding back (transmitting or reporting) transmission confirmation information (which may be referred to as, for example, Hybrid Automatic Repeat reQuest ACKnowledgement (HARQ-ACK), ACK/NACK, A/N, and so on) for a downlink shared channel (e.g., a Physical Downlink Shared Channel (PDSCH)) by using a certain codebook (HARQ-ACK codebook) is under study.

The HARQ-ACK may be mapped to an HARQ-ACK codebook. The HARQ-ACK codebook may be fed back at timing (HARQ-ACK timing, for example, a certain slot (a given slot)) determined based on a value of a certain field (a given field) (also referred to as, for example, a PDSCH-to-HARQ-timing-indicator field, an HARQ timing indicator field, and so on) in DCI.

The DCI may be, for example, DCI (scheduling DCI, for example, DCI format 1_0 or 1_1) used for PDSCH scheduling.

Specifically, the UE may receive information (HARQ timing information, for example, an RRC IE "dl-DataToUL-ACK") indicating one or more HARQ timings (HARQ timing candidates) by using higher layer signaling. Each value (code point) of the HARQ timing indicator field may be associated (mapped) with a value (e.g., {1, 2, 3, 4, 5, 6, 7, 8}) given by the HARQ timing information. The value may be a value (candidate value) of the number of slots. Alternatively, each value (code point) of the HARQ timing indicator field may be the candidate value itself.

When detecting DCI to schedule PDSCH reception in slot #n, the UE may transmit an HARQ-ACK codebook corresponding to the PDSCH reception by using an uplink control channel (e.g., a Physical Uplink Control Channel (PUCCH)) or an uplink shared channel (e.g., a Physical Uplink Shared Channel (PUSCH)) in slot #n+k. k may be the number of slots associated with an HARQ timing indicator field value in the DCI.

A resource (HARQ-ACK resource, for example, a PUCCH resource) used for the HARQ-ACK codebook transmission may be determined based on a certain field value (also referred to as, for example, a PUCCH resource indicator field value, a PUCCH resource identifier, and so on) in the DCI.

Here, the HARQ-ACK codebook includes a bit for HARQ-ACK in a certain range. The bit is referred to as an HARQ-ACK bit, HARQ-ACK information or an HARQ-ACK information bit, a feedback bit, and so on. The HARQ-ACK codebook is also referred to as a PDSCH-HARQ-ACK codebook (pdsch-HARQ-ACK-Codebook), a codebook, an HARQ codebook, an HARQ-ACK size, and so on.

The above-described certain range may be determined using at least one unit of a time domain (e.g., slot or PDCCH monitoring occasion), a frequency domain (e.g., a component carrier (CC)), a spatial domain (e.g., a layer), a transport block (TB), a group of code block that constitutes a TB (Code Block Group (CBG)), a group to which one or more PDSCHs belong (PDSCH group), and COT.

The certain range is also referred to as an HARQ-ACK window, a certain window, an HARQ-ACK bundling window, an HARQ-ACK feedback window, a bundling window, a feedback window, and so on.

The number of bits (size) and the like included in the HARQ-ACK codebook may be determined semi-statically or dynamically. The HARQ-ACK codebook whose size is determined semi-statically is also referred to as a semi-static HARQ-ACK codebook, Type-1 HARQ-ACK codebook, a semi-static codebook, and so on. The HARQ-ACK codebook whose size is determined dynamically is also referred to as a dynamic HARQ-ACK codebook, Type-2 HARQ-ACK codebook, a dynamic codebook, and so on.

In a case of the dynamic HARQ-ACK codebook, the UE may determine a size (the number of bits of HARQ-ACK to be fed back) of the dynamic HARQ-ACK codebook based on the presence or absence of a PDSCH in the above-described HARQ-ACK window.

In the NR-U, the UE is not always able to feed back HARQ-ACK for a PDSCH within COT for reception of the PDSCH. Thus, requesting (also referred to as triggering and so on) HARQ-ACK feedback by using another DCI different from DCI to schedule the PDSCH is under study. Such another DCI may be referred to as triggering DCI and so on.

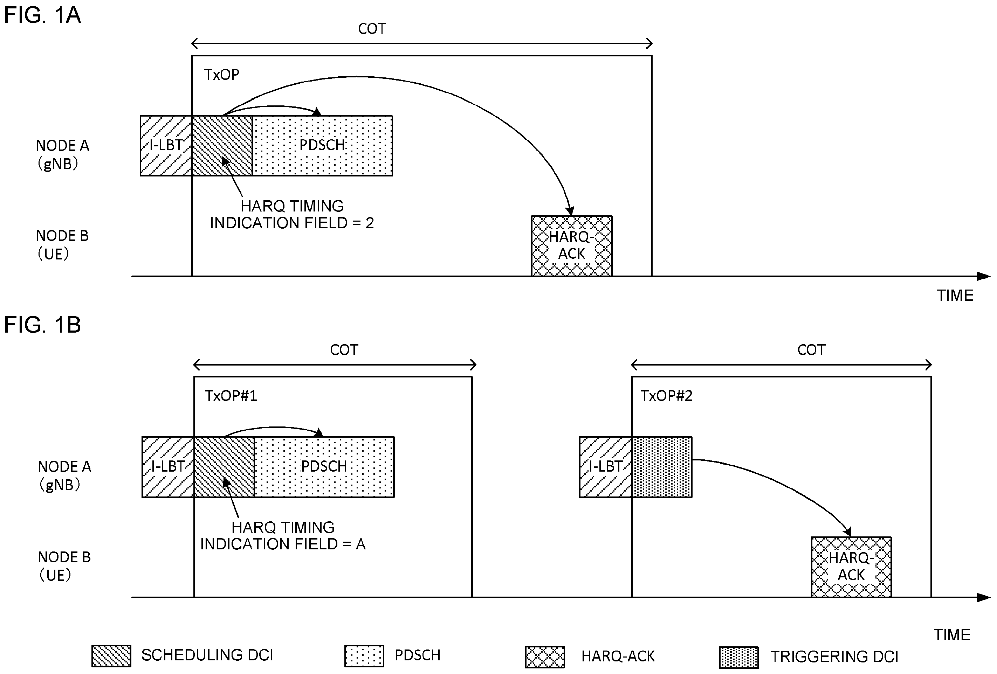

FIGS. 1A and 1B are diagrams to show examples of the HARQ-ACK feedback in the NR-U. FIGS. 1A and 1B show examples in which, for example, the base station (gNB) performs initial LBT (I-LBT), detects idle, and obtains TxOP having a time length of COT.

FIG. 1A shows an example of a case of reception of a PDSCH and HARQ-ACK feedback for the PDSCH within TxOP obtained in first I-LBT. In FIG. 1A, it is assumed that, for example, a value of the HARQ timing indicator field in DCI to schedule the PDSCH indicates the number of slots k (here, k = 2) given by HARQ timing information (e.g., an RRC IE "dl-DataToUL-ACK"), but the present disclosure is not limited to this.

In the case shown in FIG. 1A, the UE may feed back the HARQ-ACK codebook including HARQ-ACK for the PDSCH received in slot #n, in slot #n+k determined based on the value of the HARQ timing indicator field.

On the other hand, FIG. 1B shows an example of a case where HARQ-ACK for a PDSCH received within TxOP #1 obtained in the first I-LBT is fed back within TxOP #2 obtained in a subsequent I-LBT.

In FIG. 1B, it is assumed that a value of the HARQ timing indicator field in DCI to schedule the PDSCH indicates a specific value (e.g., a non-numeric value) given by HARQ timing information (e.g., an RRC IE "dl-DataToUL-ACK"). For example, in FIG. 1B, a value of the HARQ timing indicator field in DCI detected within first COT indicates a non-numeric value "A."

In the case shown in FIG. 1B, the UE may retain the HARQ-ACK bit for the PDSCH received within TxOP #1 without feeding back within TxOP #1. For example, in FIG. 1B, the UE may feed back the retained HARQ-ACK bit in response to detection of DCI (triggering DCI) to request HARQ-ACK feedback within TxOP #2.

The triggering DCI may be at least one of the followings.
(a) DCI (e.g., DCI format 0_0 or 0_1) used for PUSCH scheduling;
(b) DCI (e.g., DCI format 1_0 or 1_1) used for PDSCH scheduling;
(c) DCI used for neither PDSCH nor PUSCH scheduling; and
(d) DCI common to one or more UE groups.

For example, in a case of (a), the UE may feed back the HARQ-ACK codebook including the retained HARQ-ACK bit by using the PUSCH scheduled by the DCI. In a case of (b) to (d), the UE may feed back the HARQ-ACK codebook including the retained HARQ-ACK bit by using the PUCCH resource determined based on a value of a certain field in the DCI.

As described above, in FIG. 1B, the HARQ timing information (e.g., an RRC IE "dl-DataToUL-ACK") may include not only a numeric value (e.g., the number of slots) but also a non-numeric value. Each value (numeric value or non-numeric value) given by the HARQ timing information may be associated with an HARQ timing field value.

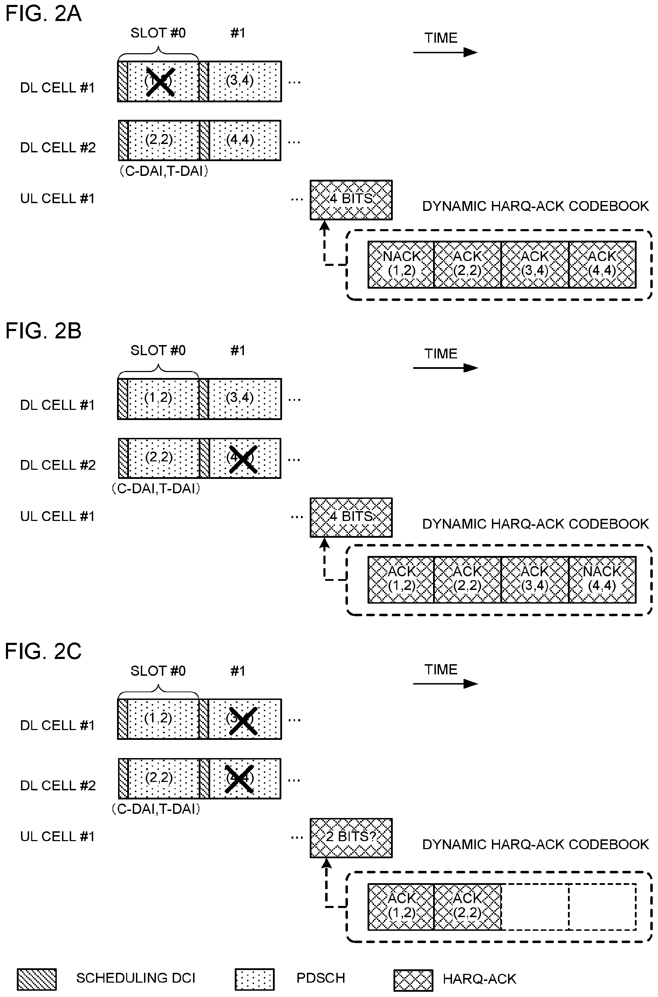

FIGS. 2A to 2C are diagrams to show examples of HARQ-ACK feedback using the dynamic HARQ-ACK codebook. FIGS. 2A to 2C show examples in which the above-described HARQ-ACK window is 2 slots (codebook (CB) time range) in the time domain, is 2 cells (DL cells #1 and #2) in the frequency domain, and is 1 layer (1 TB per PDSCH in each cell) in the spatial domain.

For example, in FIGS. 2A to 2C, PDSCHs in DL cells #1 and #2 are scheduled in each of 2 continuous slots. DCI to schedule the PDSCH in each DL cell of each slot may include a certain field (e.g., a Downlink assignment index (DAI) field) indicating information related to the PDSCH transmitted in the HARQ-ACK window.

The information indicated by the certain field includes, for example, at least the number of counts of the PDSCH (counter DAI (C-DAI)), and may include the total number (total DAI (T-DAI)) of PDSCHs assigned in the HARQ-ACK window. Note that the DAI field may be referred to as a counter DAI field and so on.

The counter DAI may indicate a count value for PDSCHs assigned before target time. On the other hand, the total DAI may indicate the total number of PDSCHs in the HARQ-ACK window transmitted before target time.

For example, a value (e.g., a 2-bit value) of the DAI field in DCI format 1_0 may indicate the counter DAI. A value of the DAI field in DCI format 1_1 may indicate the counter DAI (e.g., a case where a single serving is configured). Alternatively, the value of the DAI field in DCI format 1_1 may indicate the counter DAI and total DAI. For example, when a plurality of servings is configured, a certain number of least significant bits (LSBs) in the DAI field may indicate the counter DAI, and a certain number of most significant bits (MSBs) may indicate the total DAI.

For example, in FIGS. 2A to 2C, a value of the DAI field in DCI to schedule each PDSCH indicates the counter DAI and total DAI, but the present disclosure is not limited to this. The value of the DAI field in at least one DCI may indicate the counter DAI, and may not indicate the total DAI.

For example, in slot #0 of FIGS. 2A to 2C, the total number of PDSCHs transmitted before slot #0 in the HARQ-ACK window is 2, and PDSCHs in DL cells #1 and #2 are the first PDSCH and the second PDSCH, respectively. Thus, a value of the DAI field in DCI to schedule the PDSCH in DL cell #1 may indicate that (the counter DAI, the total DAI) = (1, 2). A value of the DAI field in DCI to schedule the PDSCH in DL cell #2 may indicate that (the counter DAI, the total DAI) = (2, 2).

In slot #1 of FIGS. 2A to 2C, the total number of PDSCHs transmitted before slot #1 in the HARQ-ACK window is 4, and PDSCHs in DL cells #1 and #2 are the third PDSCH and the fourth PDSCH, respectively. Thus, a value of the DAI field in DCI to schedule the PDSCH in DL cell #1 may indicate that (the counter DAI, the total DAI) = (3, 4). A value of the DAI field in DCI to schedule the PDSCH in DL cell #2 may indicate that (the counter DAI, the total DAI) = (4, 4).

The UE may determine the number of bits (the number of feedback bits) for the HARQ-ACK codebook including HARQ-ACK for each PDSCH in the HARQ-ACK window based on the above-described total DAI. The UE may determine a location of each HARQ-ACK bit in the HARQ-ACK codebook based on the above-described counter DAI.

For example, in FIG. 2A, the UE fails (misses) to detect DCI to schedule the PDSCH in DL cell #1 of slot #0. The UE can acknowledge the detection failure based on values of the counter DAI and total DAI in DCI to schedule the PDSCH in DL cell #2 of slot #0. Specifically, in FIG. 2A, the counter DAI in the DCI is 2 and the total DAI in the DCI is 2, but the UE detects only one DCI in DL cell #2 of slot #0, and thus can acknowledge the detection failure in DL cell #1, and can determine the number of HARQ-ACK feedback bits as 4 bits.

In FIG. 2B, the UE fails to detect DCI to schedule the PDSCH in DL cell #2 of last slot #1 in the HARQ-ACK window. The UE can acknowledge the detection failure based on values of the counter DAI and total DAI in DCI to schedule the PDSCH in DL cell #1 of slot #1. Specifically, in FIG. 2B, the counter DAI in the DCI is 3 and the total DAI in the DCI is 4, but the UE detects only one DCI in DL cell #1 of slot #1, and thus can acknowledge the detection failure in DL cell #2, and can determine the number of HARQ-ACK feedback bits as 4 bits.

However, as shown in FIG. 2C, when the UE fails to detect all of DCI to schedule the PDSCH in each of all of DL cells #1 and #2 of last slot #1 in the HARQ-ACK window, the UE may fail to acknowledge the detection failure. For example, in FIG. 2C, the UE incorrectly determines the number of HARQ-ACK feedback bits as 2 bits. In this case, there is inconsistency in understanding of the number of the feedback bits between the UE that determines 2 bits and the base station that assumes 4 bits.

When inconsistency in understanding of the number of HARQ-ACK feedback bits between the UE and the base station occurs, the base station cannot decode uplink control information (UCI) including HARQ-ACK. In this case, with respect to all of PDSCHs (DL data) corresponding to the HARQ-ACK, an error and retransmission in a higher layer occur. Therefore, reduction in at least one of frequency use efficiency and throughput may be caused.

In the unlicensed CC in the NR-U or the like, due to interference from another system (e.g., WiFi (registered trademark)) that uses an identical frequency band, interference from a hidden terminal, transmission collision between nodes with successful LBT at an identical timing, and the like, there is a possibility that interference stronger than that in the licensed CC occurs.

Thus, as shown in FIG. 2C, the probability of failing to detect all of DCI for a last slot in the HARQ-ACK window is higher than that in the licensed CC. Therefore, reduction in at least one of frequency use efficiency and throughput occurred due to inconsistency in understanding of the number of HARQ-ACK feedback bits between the UE and the base station may have larger impact than that in the licensed CC.

Thus, the inventors of the present invention came up with the idea of preventing the inconsistency in understanding of the number of HARQ-ACK feedback bits between the UE and the base station by including, in the above-described triggering DCI, information from which the number of HARQ-ACK feedback bits is derivable.

Embodiments according to the present disclosure will be described in detail hereinafter with reference to the drawings. Respective aspects of the present embodiment may each be employed individually, or may be employed in combination.

Note that HARQ-ACK feedback in an unlicensed CC will be described in the present embodiment, but the present disclosure is not limited to this. The present embodiment can be employed in a licensed CC that performs HARQ-ACK feedback based on a triggering DCI.

### (First Aspect)

In a first aspect, determination of the number of feedback bits based on DCI (triggering DCI) to request HARQ-ACK feedback will be described. Note that the number of feedback bits may be expressed as a size of an HARQ-ACK codebook.

The triggering DCI may include at least one of information related to the number of feedback bits (information of the number of bits) and information related to transmission timing of last DCI to schedule a PDSCH (DCI timing information).

Here, the information of the number of bits may be (1) the number of feedback bits itself, (2) information (e.g., 1 bit) indicating that which of an even number or odd number the number of feedback bits is, or (3) information (e.g., 2 bits) indicating a value obtained by applying a certain calculation to the number of feedback bits.

The certain calculation of (3) may be, for example, a modulo calculation of the number of feedback bits using a certain value. For example, the information of the number of bits may be a value of a counter DAI in last DCI transmitted in an HARQ-ACK window. Note that the value of the counter DAI may be a value obtained by calculating a modulo of a count value for the PDSCH in the HARQ-ACK window by using a certain value (e.g., 4 + 1).

The DCI timing information may be information related to transmission timing of the last DCI in the HARQ-ACK window. For example, the DCI timing information may be a number of a slot in which the last DCI in the HARQ-ACK window is transmitted, or may be time offset (time difference) between the slot in which the last DCI is transmitted and a slot in which the above-described triggering DCI is transmitted.

In the first aspect, a UE may determine the number of HARQ-ACK feedback bits based on at least one of the information of the number of bits in the triggering DCI and the DCI timing information.

Specifically, when the information of the number of bits is (1) the number of feedback bits itself as described above, the UE may determine the number of the feedback bits.

When the information of the number of bits is (2) information indicating that which of an even number or odd number the number of feedback bits is as described above, the UE may determine the maximum even number or odd number of PDSCHs that can be transmitted in the HARQ-ACK window as the number of the feedback bits. Alternatively, when a base station performs control so that the number of scheduling TBs in an identical slot is an odd number, failing to detect in the slot in which the last DCI is transmitted causes inconsistency between information related to which of an even number or odd number the number of the feedback is acknowledged by the UE and information related to an even number or odd number notified by the triggering DCI, and thus the UE can acknowledge detection failure being occurred. In this case, the number of bits for additional information included in the triggering DCI can be minimized as compared to (1).

When the information of the number of bits is (3) information (e.g., a value of the counter DAI in last DCI transmitted in the HARQ-ACK window) indicating a value obtained by applying the certain calculation to the number of feedback bits as described above, the UE may decode the number of the feedback bits based on the value. In this case, the number of bits for the additional information included in the triggering DCI can be suppressed as compared to (1).

The UE may determine the number of HARQ-ACK feedback bits based on the above-described DCI timing information and the number of DL cells configured or activated for the UE. For example, the UE may determine a slot in which the last DCI is transmitted based on the DCI timing information, and may determine the number of the HARQ-ACK feedback bits by assuming that the PDSCH is scheduled in all of DL cells configured or activated in the slot.

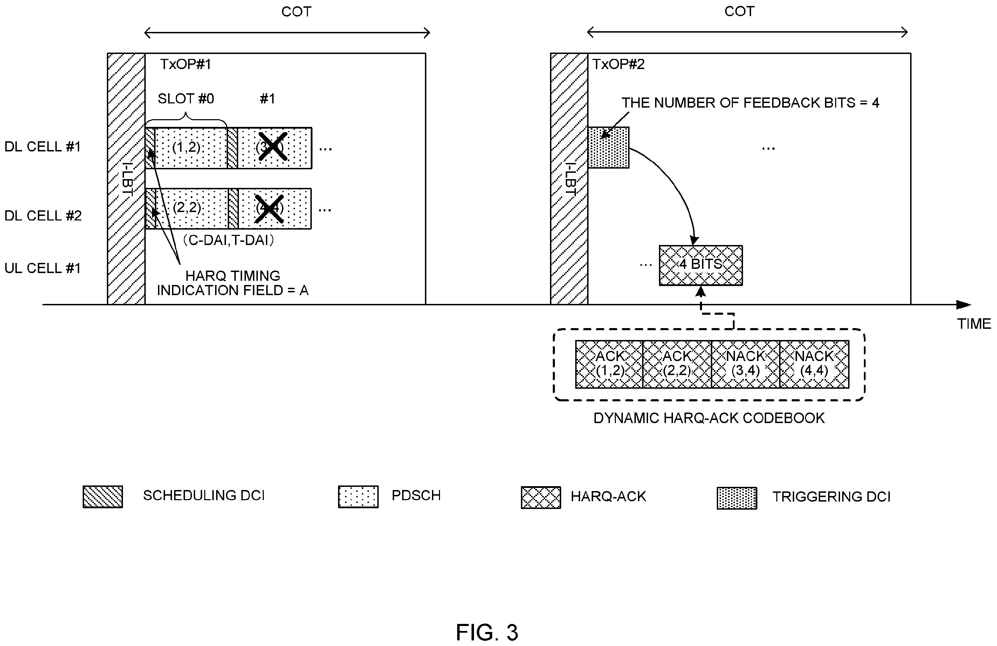

FIG. 3 is a diagram to show an example of HARQ-ACK feedback according to the first aspect. In FIG. 3, it is assumed that DL cells #1 and #2 for receiving the PDSCH and UL cell #1 for feeding back HARQ-ACK are configured for the UE, but the present disclosure is not limited to this. A cell for receiving the PDSCH and a cell for feeding back HARQ-ACK may be identical.

For example, in FIG. 3, the base station performs initial LBT (I-LBT), detects idle in at least DL cells #1 and #2, and obtains TxOP #1. As shown in FIG. 3, within TxOP #1, PDSCHs in DL cells #1 and #2 are scheduled in each of 2 continuous slots. Each DCI to schedule the PDSCH in each DL cell of each slot may include the counter DAI or the counter DAI and total DAI.

For example, in FIG. 3, a value of an HARQ timing indicator field in each DCI transmitted within TxOP #1 indicates a non-numeric value (here, "A"). Therefore, the UE retains an HARQ-ACK bit for the PDSCH scheduled by each DCI. Note that in FIG. 3, it is assumed that the UE fails to detect DCI transmitted in both DL cells #1 and #2 of last slot #1 in the HARQ-ACK window.

As shown in FIG. 3, within TxOP #2 obtained subsequently, the UE detects the triggering DCI. For example, in FIG. 3, it is assumed that information indicating the number of feedback bits "4" is included in the triggering DCI, but the present disclosure is not limited to this. As described above, it is only necessary that the number of the feedback bits is determined based on at least one of the information of the number of bits in the triggering DCI and DCI timing information.

In FIG. 3, within TxOP #1, the UE fails to detect DCI transmitted in both DL cells #1 and #2 of last slot #1 in the HARQ-ACK window. Therefore, when based on the counter DAI and total DAI, the UE may incorrectly acknowledge the number of HARQ-ACK feedback bits as 2 bits.

On the other hand, as shown in FIG. 3, the information indicating the number of feedback bits "4" is included in the triggering DCI transmitted within TxOP #2, and thus the UE can acknowledge that two PDSCHs have been scheduled besides 2-bit HARQ-ACK bits retained by itself. Therefore, in addition to the retained HARQ-ACK bits corresponding to the counter DAI = 1, 2, the UE may generate a 4-bit dynamic HARQ-ACK codebook including 2-bit NACK corresponding to DCI that has been failed to be detected, and may transmit the generated codebook to the base station.

Note that in FIG. 3, the triggering DCI may be any one of the above-described (a) to (d). For example, in a case of (a), the UE may transmit the generated dynamic HARQ-ACK codebook by using a PUSCH scheduled by the triggering DCI. In a case with (b) to (d), the UE may transmit the generated dynamic HARQ-ACK codebook by using a PUCCH resource determined based on a value of a certain field in the triggering DCI.

According to the first aspect, the UE determines the number of HARQ-ACK feedback bits based on at least one of the information of the number of bits and DCI timing information, and thus an occurrence of inconsistency in understanding of the number of the HARQ-ACK feedback bits between the UE and the base station can be reduced.

### (Second Aspect)

In a second aspect, HARQ-ACK feedback for each PDSCH group or HARQ-ACK feedback common to one or more PDSCH groups will be described. Here, the PDSCH group is a group including one or more PDSCHs. Note that the second aspect can be combined with the first aspect. In the following, differences from the first aspect will be mainly described.

DCI to schedule a PDSCH may include information indicating a group to which the PDSCH belongs (e.g., a PDSCH group index, a PDSCH group ID).

The UE may control HARQ-ACK feedback for a single PDSCH group based on the triggering DCI, or may commonly control HARQ-ACK feedback commonly to one or more PDSCH groups.

### <HARQ-ACK Feedback for Each PDSCH Group>

The UE may generate an HARQ-ACK codebook for each PDSCH group. Each HARQ-ACK codebook may include an HARQ-ACK bit for one or more PDSCHs belonging to one PDSCH group.

The above-described triggering DCI may include information indicating a PDSCH group for which HARQ-ACK feedback is requested (e.g., a PDSCH group index, a PDSCH group ID).

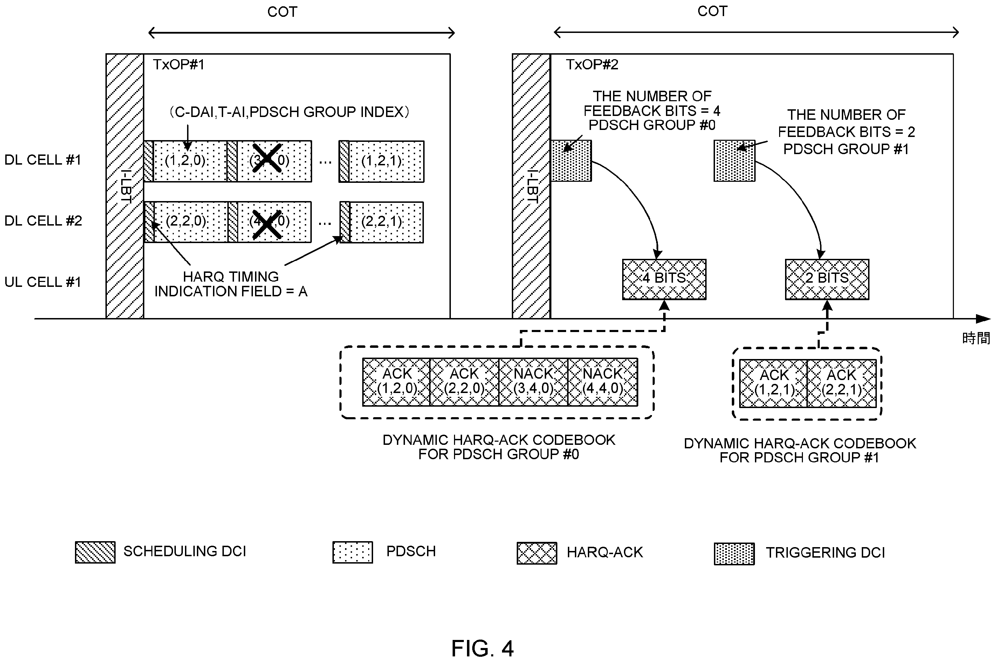

FIG. 4 is a diagram to show an example of the HARQ-ACK feedback for each PDSCH group according to the second aspect. FIG. 4 mainly describes differences from FIG. 3. It is assumed that, for example, within TxOP #1 of FIG. 4, four PDSCHs of PDSCH group #0 and two PDSCHs of PDSCH group #1 are scheduled.

As shown in FIG. 4, DCI to schedule each PDSCH may include a certain field indicating the counter DAI or the counter DAI and total DAI and a certain field indicating the PDSCH group index. In FIG. 4, it is assumed that the counter DAI (C-DAI) and total DAI (T-DAI) are counted for each PDSCH group, but the present disclosure is not limited to this.

For example, in FIG. 4, a value of the HARQ timing indicator field in each DCI transmitted within TxOP #1 indicates a non-numeric value (here, "A"). Therefore, the UE may retain, for each PDSCH group, an HARQ-ACK bit for the PDSCH scheduled by each DCI. Note that in FIG. 4, the UE fails to detect 2 pieces of DCI in a last slot of PDSCH group #0 in the HARQ-ACK window.

As shown in FIG. 4, within TxOP #2 obtained subsequently, the UE detects the triggering DCI indicating the number of feedback bits "4" and PDSCH group #0. The UE may generate a 4-bit dynamic HARQ-ACK codebook including 2-bit NACK corresponding to DCI that has been failed to be detected, in addition to the retained HARQ-ACK bits corresponding to the counter DAI = 1, 2 for PDSCH group #0.

The UE also detects the triggering DCI indicating the number of feedback bits "2" and PDSCH group #1. The UE may generate a 2-bit dynamic HARQ-ACK codebook including the retained HARQ-ACK bits corresponding to the counter DAI = 1, 2 for PDSCH group #1.

As described above, the triggering DCI may include at least one of information indicating a PDSCH group, information of the number of bits of HARQ-ACK for the PDSCH group, and DCI timing information. Therefore, when the HARQ-ACK codebook is generated for each PDSCH group, an occurrence of inconsistency in understanding between the UE and the base station can be reduced.

Note that in FIG. 4, the HARQ-ACK codebook for a single PDSCH group is fed back based on a single triggering DCI, but the present disclosure is not limited to this. A plurality of HARQ-ACK codebooks for a plurality of PDSCH groups may be fed back based on a single triggering DCI. In this case, the single triggering DCI may include information indicating the plurality of the PDSCH groups.

In FIG. 4, it is assumed that information indicating the number of feedback bits for a certain PDSCH group is included in the triggering DCI, but the present disclosure is not limited to this. As described above, it is only necessary that the number of the feedback bits is determined based on at least one of the information of the number of bits in the triggering DCI and DCI timing information.

### <HARQ-ACK Feedback Common to PDSCH Groups>

The UE may generate an HARQ-ACK codebook common to one or more PDSCH groups. The HARQ-ACK codebook may include an HARQ-ACK bit for one or more PDSCHs belonging to one or more PDSCH groups.

The above-described triggering DCI may include information indicating the one or more PDSCH groups (e.g., a PDSCH group index, a PDSCH group ID), or may not include the information.

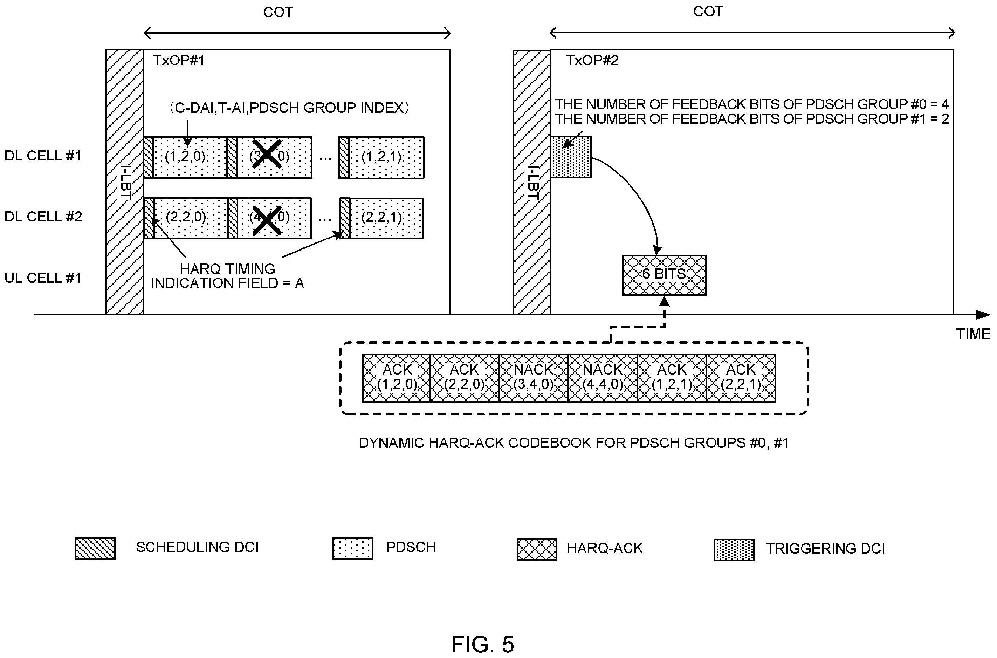

FIG. 5 is a diagram to show an example of HARQ-ACK feedback common to PDSCH groups according to the second aspect. FIG. 5 mainly describes differences from FIG. 4. It is assumed that, for example, within TxOP #1 of FIG. 5, similarly to FIG. 4, four PDSCHs of PDSCH group #0 and two PDSCHs of PDSCH group #1 are scheduled, and 2 pieces of DCI in a last slot for PDSCH group #0 are failed to be detected.

As shown in FIG. 5, within TxOP #2 obtained subsequently, the UE detects the triggering DCI indicating the number of feedback bits for PDSCH group #0 "4" and the number of feedback bits for PDSCH group #1 "2."

The retained HARQ-ACK bits for PDSCH group #0 is 2 bits, and thus the UE can acknowledge detection failure of the two pieces of DCI. Therefore, the UE may generate 6-bit dynamic HARQ-ACK codebook including the retained 2-bit HARQ-ACK bits for PDSCH group #0, 2-bit NACK, and retained 2-bit HARQ-ACK bits for PDSCH group #1.

Note that in FIG. 5, the number of feedback bits for each PDSCH group is specified by the triggering DCI, but the present disclosure is not limited to this. Information indicating the total number of feedback bits for one or more PDSCH groups (6 bits in FIG. 5) may be included in the triggering DCI. In this case, the UE cannot acknowledge which PDSCH group the UE has failed to detect DCI in, and thus differential NACK bits (e.g., 2-bit NACK) may be concatenated after the retained HARQ-ACK bits.

According to the second aspect, even when the UE controls HARQ-ACK feedback for each PDSCH group or HARQ-ACK feedback common to one or more PDSCH groups, an occurrence of inconsistency in understanding of the number of the HARQ-ACK feedback bits between the UE and the base station can be reduced.

### (Other Aspects)

In the above-described first and second aspects, the triggering DCI is assumed to include at least one of the above-described information of the number of bits and DCI timing information, but scheduling DCI may include at least one of the above-described information of the number of bits and DCI timing information.

The UE may notify the base station of capability information indicating whether HARQ-ACK feedback based on the triggering DCI according to the above-described first and second aspects is supported. The UE may be indicated to activate the HARQ-ACK feedback.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

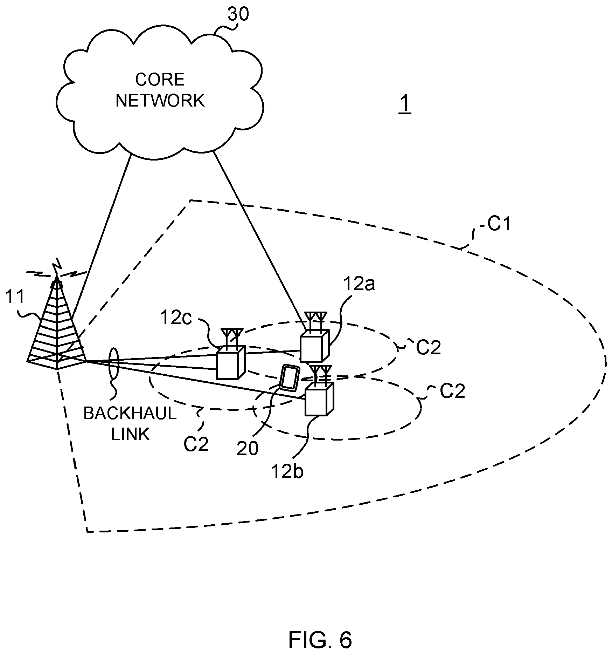

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

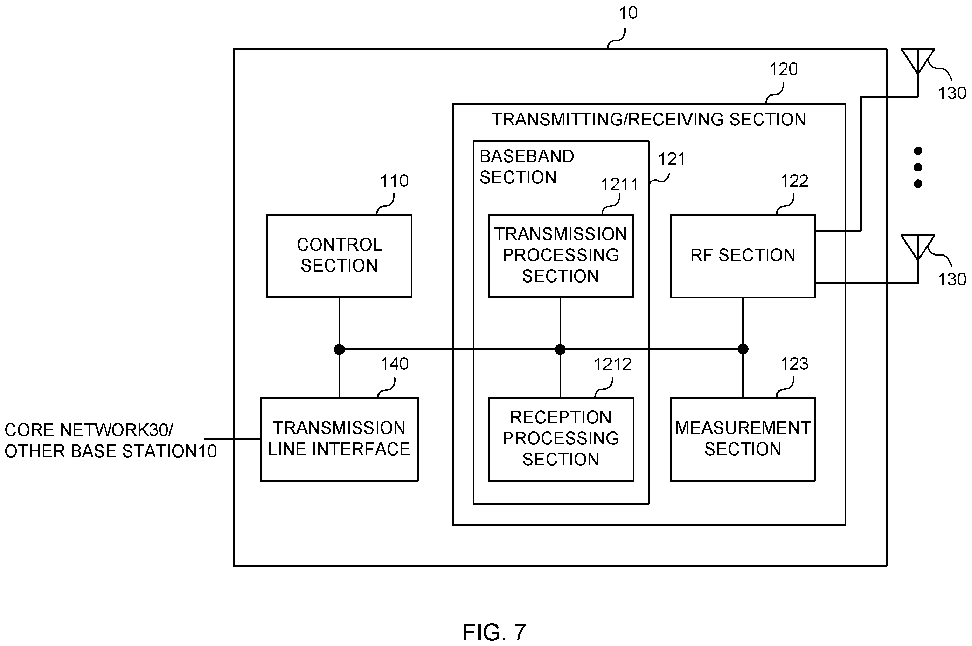

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information to request feedback of transmission confirmation information for one or more downlink shared channels.

The control section 110 may control retransmission of the downlink shared channel based on the transmission confirmation information fed back from the user terminal 20.

### (User Terminal)

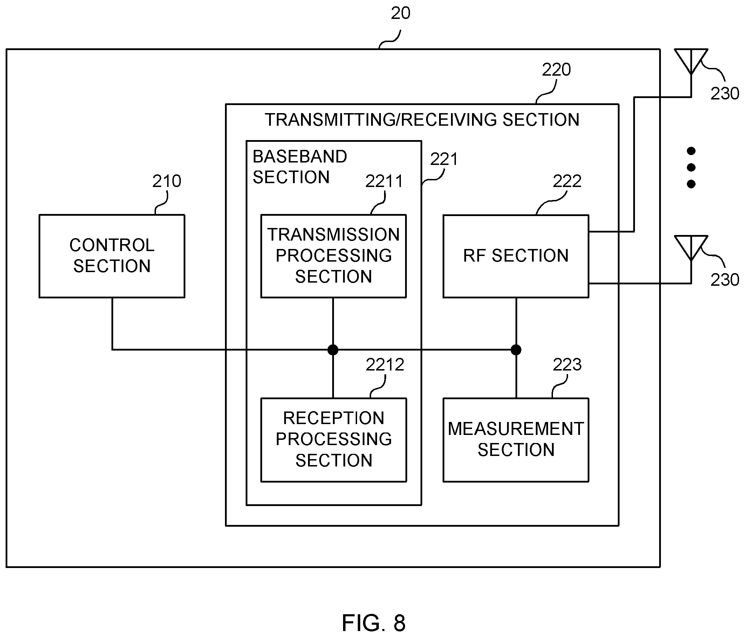

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may receive downlink control information to request feedback of transmission confirmation information for one or more downlink shared channels.

The control section 210 may determine the number of feedback bits of the transmission confirmation information based on at least one of information related to the number of feedback bits in the downlink control information and information related to transmission timing of last downlink control information to schedule the downlink shared channel.

The one or more downlink shared channels may belong to a single group. The downlink control information may include information indicating the single group.

The one or more downlink shared channels may belong to one or more groups. The information related to the number of feedback bits may include information related to the number of feedback bits for each group or the number of feedback bits for all of the groups.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

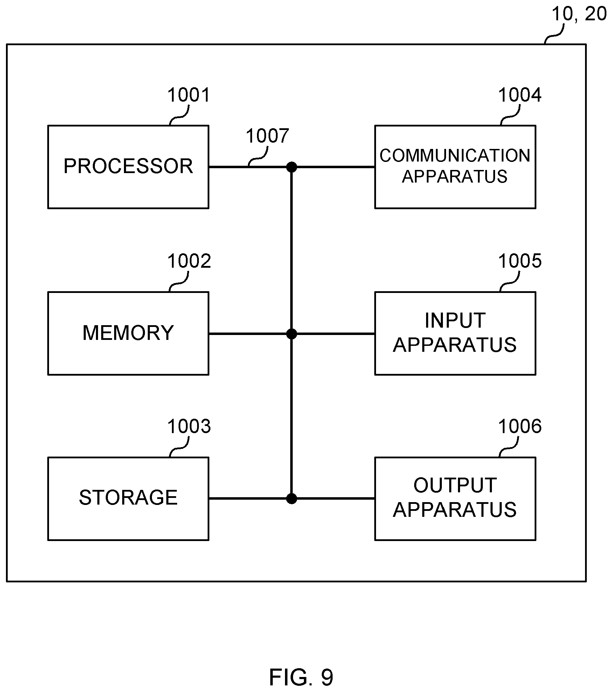

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Although the invention has been explained in relation to its preferred embodiment(s) as mentioned above, it is to be understood that many other possible modifications and variations can be made without departing from the scope of the present invention, which is defined by the claims.

## Claims

1. A terminal (20) comprising:
a receiving section (220) configured to receive a first downlink control information, DCI, and a second DCI; and
a control section (210) configured to determine a hybrid automatic repeat request acknowledgement, HARQ-ACK, based on:
first information regarding a HARQ-ACK timing, the first information being included in the first DCI, and
second information regarding a physical downlink shared channel, PDSCH, group for which HARQ-ACK feedback is requested, the second information being included in the second DCI,
wherein the second DCI includes information regarding a downlink assignment index, DAI, corresponding to each of a plurality of PDSCH groups including the PDSCH group for which the HARQ-ACK feedback is requested.

2. The terminal (20) according to claim 1, wherein the second DCI includes information regarding a PDSCH group, and second information regarding the PDSCH group for which the HARQ-ACK feedback is requested.

3. A radio communication method for a terminal (20), comprising:
receiving a first downlink control information, DCI, and a second DCI; and
determining a hybrid automatic repeat request acknowledgement, HARQ-ACK, based on:
first information regarding a HARQ-ACK timing, the first information being included in the first DCI, and
second information regarding a physical downlink shared channel, PDSCH, group for which HARQ-ACK feedback is requested, the second information being included in the second DCI,
wherein the second DCI includes information regarding a downlink assignment index, DAI, corresponding to each of a plurality of PDSCH groups including the PDSCH group for which the HARQ-ACK feedback is requested.

4. A base station (10) comprising:
a transmitting section (120) configured to transmit first downlink control information, DCI, and a second DCI; and
a control section (110) configured to control reception of a hybrid automatic repeat request acknowledgement, HARQ-ACK, based on:
first information regarding a hybrid automatic repeat request acknowledgement, HARQ-ACK, timing, the first information being included in the first DCI, and
second information regarding a physical downlink shared channel, PDSCH, group for which HARQ-ACK feedback is requested, the second information being included in the second DCI,
wherein the second DCI includes information regarding a downlink assignment index, DAI, corresponding to each of a plurality of PDSCH groups including the PDSCH group for which the HARQ-ACK feedback is requested.

5. A system (1) comprising a terminal (20) according to claim 1 or 2, and a base station (10) according to claim 4.

## Patentansprüche

1. Endgerät (20), umfassend:
einen Empfangsabschnitt (220), der so konfiguriert ist, dass er erste Downlink-Steuerinformationen, DCI, und zweite DCI empfängt; und
einen Steuerabschnitt (210), der so konfiguriert ist, dass er eine Bestätigung einer hybriden automatischen Wiederholungsanforderung, HARQ-ACK, basierend auf Folgendem bestimmt:
ersten Informationen bezüglich einer HARQ-ACK-Zeitgebung, wobei die ersten Informationen in den ersten DCI eingeschlossen sind, und
zweiten Informationen bezüglich einer physikalischen gemeinsam genutzten Downlink-Kanal-Gruppe, PDSCH, für die eine HARQ-ACK-Rückmeldung angefordert wird, wobei die zweiten Informationen in den zweiten DCI eingeschlossen sind,
wobei die zweiten DCI Informationen bezüglich eines Downlink-Zuweisungsindex, DAI, einschließen, der jeder einer Vielzahl von PDSCH-Gruppen entspricht, einschließlich der PDSCH-Gruppe, für die die HARQ-ACK-Rückmeldung angefordert wird.

2. Endgerät (20) nach Anspruch 1, wobei die zweiten DCI Informationen bezüglich einer PDSCH-Gruppe und zweite Informationen bezüglich der PDSCH-Gruppe einschließen, für die die HARQ-ACK-Rückmeldung angefordert wird.

3. Funkkommunikationsverfahren für ein Endgerät (20), umfassend:
Empfangen erster Downlink-Steuerungsinformationen, DCI, und zweiter DCI; und
Bestimmen einer Bestätigung einer hybriden automatischen Wiederholungsanforderung, HARQ-ACK, basierend auf Folgendem:
ersten Informationen bezüglich einer HARQ-ACK-Zeitgebung, wobei die ersten Informationen in den ersten DCI enthalten sind, und
zweiten Informationen bezüglich einer physikalischen gemeinsam genutzten Downlink-Kanal-Gruppe, PDSCH, für die eine HARQ-ACK-Rückmeldung angefordert wird, wobei die zweiten Informationen in den zweiten DCI eingeschlossen sind,
wobei die zweiten DCI Informationen bezüglich eines Downlink-Zuweisungsindex, DAI, enthalten, der jeder einer Vielzahl von PDSCH-Gruppen entspricht, einschließlich der PDSCH-Gruppe, für die die HARQ-ACK-Rückmeldung angefordert wird.

4. Basisstation (10), umfassend:
einen Übertragungsabschnitt (120), der konfiguriert ist, um erste Downlink-Steuerinformationen, DCI, und zweite DCI zu übertragen; und
einen Steuerabschnitt (110), der so konfiguriert ist, dass er das Empfangen einer hybriden automatischen Wiederholungsanforderung, HARQ-ACK, basierend auf Folgendem steuert:
ersten Informationen bezüglich der Zeitgebung einer Bestätigung einer automatischen Hybridwiederholungsanforderung, HARQ-ACK, wobei die ersten Informationen in den ersten DCI eingeschlossen sind, und
zweiten Informationen bezüglich einer physikalischen gemeinsam genutzten Downlink-Kanal-Gruppe, PDSCH, für die eine HARQ-ACK-Rückmeldung angefordert wird, wobei die zweiten Informationen in den zweiten DCI eingeschlossen sind,
wobei die zweiten DCI Informationen bezüglich eines Downlink-Zuweisungsindex, DAI, enthalten, der jeder einer Vielzahl von PDSCH-Gruppen entspricht, einschließlich der PDSCH-Gruppe, für die die HARQ-ACK-Rückmeldung angefordert wird.

5. System (1), das ein Endgerät (20) nach Anspruch 1 oder 2 und eine Basisstation (10) nach Anspruch 4 umfasst.

## Revendications

1. Terminal (20) comprenant :
une section de réception (220) configurée pour recevoir des premières informations de commande de liaison descendante, DCI, et des secondes DCI ; et
une section de commande (210) configurée pour déterminer un accusé de réception de demande de répétition automatique hybride, HARQ-ACK, sur la base :
de premières informations concernant une synchronisation d'HARQ-ACK, les premières informations étant incluses dans les premières DCI, et
de secondes informations concernant un groupe de canaux physiques partagés de liaison descendante, PDSCH, pour lequel une rétroaction d'HARQ-ACK est demandée, les secondes informations étant incluses dans les secondes DCI,
dans lequel les secondes DCI incluent des informations concernant un indice d'attribution de liaison descendante, DAI, correspondant à chacun d'une pluralité de groupes de PDSCH incluant le groupe de PDSCH pour lequel la rétroaction d'HARQ-ACK est demandée.

2. Terminal (20) selon la revendication 1, dans lequel les secondes DCI incluent des informations concernant un groupe de PDSCH et des secondes informations concernant le groupe de PDSCH pour lequel la rétroaction d'HARQ-ACK est demandée.

3. Procédé de communication radio pour un terminal (20), comprenant :
la réception de premières informations de commande de liaison descendante, DCI, et de secondes DCI ; et
la détermination d'un accusé de réception de demande de répétition automatique hybride, HARQ-ACK, sur la base :
de premières informations concernant une synchronisation d'HARQ-ACK, les premières informations étant incluses dans les premières DCI, et
de secondes informations concernant un groupe de canaux physiques partagés de liaison descendante, PDSCH, pour lequel une rétroaction d'HARQ-ACK est demandée, les secondes informations étant incluses dans les secondes DCI,
dans lequel les secondes DCI incluent des informations concernant un indice d'attribution de liaison descendante, DAI, correspondant à chacun d'une pluralité de groupes de PDSCH incluant le groupe de PDSCH pour lequel la rétroaction d'HARQ-ACK est demandée.

4. Station de base (10) comprenant :
une section de transmission (120) configurée pour transmettre des premières informations de commande de liaison descendante, DCI, et des secondes DCI ; et
une section de commande (110) configurée pour commander la réception d'un accusé de réception de demande de répétition automatique hybride, HARQ-ACK, sur la base :
de premières informations concernant une synchronisation d'accusé de réception de demande de répétition automatique hybride, HARQ-ACK, les premières informations étant incluses dans les premières DCI, et
de secondes informations concernant un groupe de canaux physiques partagés de liaison descendante, PDSCH, pour lequel une rétroaction d'HARQ-ACK est demandée, les secondes informations étant incluses dans les secondes DCI,
dans lequel les secondes DCI incluent des informations concernant un indice d'attribution de liaison descendante, DAI, correspondant à chaque groupe de PDSCH d'une pluralité de groupes de PDSCH incluant le groupe de PDSCH pour lequel la rétroaction d'HARQ-ACK est demandée.

5. Système (1) comprenant un terminal (20) selon la revendication 1 ou la revendication 2 et une station de base (10) selon la revendication 4.
